Europäisches Patentamt

European Patent Office

Office européen des brevets

(11) Publication number: **0 445 616 A2**

# EUROPEAN PATENT APPLICATION

(21) Application number: **91102717.5**

(22) Date of filing: **25.02.91**

(51) Int. Cl.⁵: **G01N 35/00**

(30) Priority: **03.03.90 JP 52201/90**

(43) Date of publication of application:
**11.09.91 Bulletin 91/37**

(84) Designated Contracting States:
**DE FR**

(71) Applicant: **HITACHI, LTD.**
**6, Kanda Surugadai 4-chome**
**Chiyoda-ku, Tokyo 101(JP)**

(72) Inventor: **Koakutsu, Takahiro**
**2-103, Tsukubadai Apt., 663 Ichige**
**Katsuta-shi, Ibaraki 312(JP)**

Inventor: **Matsuoka, Yoshio**
**1114-175 Inada**
**Katsuta-shi, Ibaraki 312(JP)**
Inventor: **Mimura, Tomonori**
**Akebono-ryo, 663 Ichige**
**Katsuta-shi, Ibaraki 312(JP)**

(74) Representative: **Altenburg, Udo, Dipl.-Phys. et al**
**Patent- und Rechtsanwälte**
**Bardehle-Pagenberg-Dost-Altenburg &**
**Partner Postfach 86 06 20**
**W-8000 München 86(DE)**

(54) **Automatic analysis method and apparatus of the same.**

(57) Samples to be analyzed in one operation are contained in sample containers (101). The sample containers are divided into two or more classes of the samples. The samples divided by the classes are accommodated in racks (102), respectively. Marks (201) are put on each rack for identifying the classes of the samples. The marks are read by an automatic reader (106) prior to the starting of the analysis step. The automatic reader also find the order of transfer of the sample containers in each class, which are sent from a transfer line. Analysis parameters of the samples to be analyzed are previously memorized in accompany with the order of the transfer of the sample containers in each class of the samples. When the order of the transfer of the sample containers is discriminated, the analysis parameters are read out from a memory. Selection of a reagent to be dispensed into a reaction containers (108), selection of analysis items, computation of data on a result of the analysis and registering the result of the computation are taken place by an instruction of a control system (105).

FIG. 1

FIELD OF THE INVENTION

The present invention relates to a method of and an apparatus for automatically analyzing a plurality of samples, and more particularly to the method and apparatus for analyzing and measuring during an operation time of the same analysis system a plurality of classes of samples held in sample containers so that the same kind of sample is in the same class of sample containers.

BACKGROUND OF THE INVENTION

The techniques for automatically analyzing a plurality of samples have heretofore been put to practical use. In an automatic analysis system of this kind, a plurality of sample containers are generally arranged in line on a transfer line (the arranging of sample containers is done by setting sample containers directly or setting a plurality of sample containers in racks). These sample containers are moved intermittently on the transfer line, and the sample in the sample containers is dispensed into reaction containers in predetermined positions, the sample in the reaction containers being agitated after the dispensation of a reagent thereinto and sent to an analysis section.

The measurement data obtained after the analysis are stored in a memory ordinarily or a floppy disk or a hard disk, and can be indicated on a display by an operation through an input/output unit (for example, a keyboard), these data being also outputted by a printer as necessary.

The conventional techniques concerning the automatic analysis of samples are disclosed in, for example, Japanese Patent Laid-Open No. 59-170771 entitled "Automatic chemical analysis apparatus" and published on September 27, 1984 and Japanese Patent Laid-Open No. 60-8752 entitled "Automatic analysis apparatus" and published on January 17, 1985.

The automatic analyzing apparatuses of this kind are used in, for example, a clinical biochemical inspection system and systems in various fields of measurement.

The biochemical analysis has heretofore been directed mainly to the blood (especially, serum) but it has recently been directed to specimens (samples) other than the blood, such as urine and a pith liquid as well. In addition, measurement is done with the samples diluted at various rates in some cases, and the mode of analysis is thus being diversified.

In order to analyze not less than two classes of samples, (1) a system using different exclusive analysis apparatuses for different samples, or (2) a system using a single analysis apparatus by which after one analysis of a sample, another sample is analyzed.

However, in the system (1), a plurality of analysis apparatuses are required, and an excessively large equipment investment is necessary.

In the system (2), it is necessary to newly operate an analysis apparatus every time one kind or class of sample is analyzed, and various classes of analysis parameters (for example, the class of sample, number of samples, analysis method, analysis item representative of the content of examination and range of normal values concerning the analysis items) about samples have to be reset each time an object sample is changed. Namely, this system has points to be improved since it lowers the operation efficiency due to a lot of time required to set parameters and operate the apparatus.

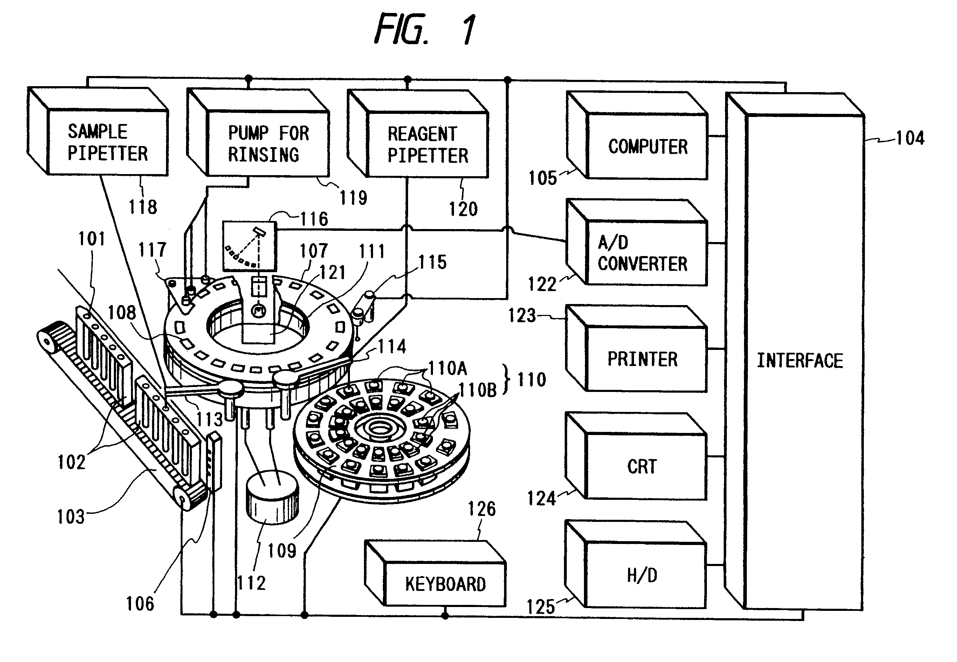

As disclosed in and proposed by Fig. 1 of the above Japanese Patent Laid-Open No. 170771/1984 which belongs to the analysis method (1) mentioned above, the conventional techniques include the techniques in which the sample containers each of which holds one of a plurality of classes of samples are arranged in a transfer line in parallel, these samples in the sample containers being dispensed into the reaction containers on turntables by using sample dispensers by classes of the samples, reagents suitable for the different class of samples being dispensed into the reaction containers by using reagent dispensers.

The above conventional techniques are advantageous in that not less than two classes of samples can be analyzed during an operation time of the same analysis system. However, a limitation that containers holding not less than two classes of samples are arranged so that different samples is paced in the transfer line in parallel. Moreover, since the conventional analysis apparatus has a reaction disk per each class of the sample to be analyzed, it can be said that the apparatus is not given the consideration to the space and the rate of operation of the apparatus.

SUMMARY OF THE INVENTION

An object of the present invention is to obtain a highly efficient automatic analysis system in which from the transferring of a plurality of sets of containers holding samples by class, to the registering of the measurement data based on the result of analysis thereof, all operations are carried out automatically and continuously during an operation time of the same analysis system, and provide a method of and an apparatus for automatically analyzing samples, which have few limitations on the arrangement of sample containers in the transfer line, and which have a high operation efficiency.

For attaining the object, four problem-solving means are provided as explained hereunder.

First and second problem-solving means are of inventions relating to automatic analysis methods.

The first problem-solving means is such that an automatic analyzing system carrying out the steps of transferring a plurality of sample containers sequentially, dispensing a sample from the sample containers into reaction containers according to the order of transfer of the sample containers, dispensing a reagent into the reaction containers, analyzing the sample after reaction, inputting the data on the result of analysis, computing the data on the basis of preset analysis parameters, and registering (store) the result of the computation, performs the steps of

selecting two or more classes of samples to be analyzed in one operation of the analyzing system, the samples being contained in sample containers by class,

putting marks representative of the classes of the samples on the sample containers or racks, or putting a mark representative of an analysis process starting position to a sample disk, each holding a class of sample containers holding by class, respectively,

reading the marks or the mark by an automatic reader prior to the starting of a analysis step and finding the order of transfer of the sample containers sent from the transfer line by class (the order of the kinds may be determined at random),

setting and registering in advance analysis parameters concerning the classes of samples to be analyzed in connection with the order of transfer of the sample containers,

reading out from a memory the analysis parameters associated with the order of transfer of the sample containers by class after the order is found, carrying out a series of control operations such as the selection, which is based on the analysis parameters, of a reagent to be dispensed into the reaction containers, selection of analysis items and computation of data on the result of the analysis, and registering the result of the computation.

The second problem-solving means performs the steps of putting ID (identity) marks representative of the classes and numbers of the samples on the sample containers or the sample disk and reading before a sample analysis step is started the ID marks sequentially by an automatic reader instead of using the system for discriminating the samples in the sample containers from one another on the basis of the marks representative of the classes of samples and the order of transfer of sample containers or using the sample disk having the analysis process starting position thereon as in the first problem-solving means,

setting and registering analysis parameters concerning a plurality of classes of samples to be analyzed in connection with the ID marks,

reading out from the memory the corresponding analysis parameters when the ID marks on the sample containers are read out by the automatic reader, carrying out a series of control operations such as the selection, based on the analysis parameters, of a reagent to be dispensed into the reaction containers, the selecting of analysis items and the computation of data on the result of the analysis, and registering the result of the computation.

A third problem-solving means relates to an apparatus used in the automatic analysis method of the first problem-solving means. Namely, the third means comprises

a sample container transfer mechanism for feeding a plurality of sample containers, or a sample disk,

a sample dispenser for dispensing the sample in the sample containers transferred sequentially into each of reaction containers,

a group of reagent containers holding reagents, which correspond to samples and analysis items, when two or more classes of samples are analyzed,

a reagent dispenser having a function of selecting a corresponding relative reagent from the reagent containers and dispensing the selected reagent into the reaction containers,

an analyzer for analyzing the samples in the reaction containers after the reagent dispensation operation is completed,

a reaction container transferring mechanism for transferring the reaction containers in a circulatory passage including a sample dispensation position, a reagent dispensation position, a sample analysis position and a reaction container cleaning position,

identification marks representing the classes of samples and attached to the sample containers or racks, or an analysis process starting position attached to the sample disk, holding different sets of sample containers holding different classes of samples, respectively,

an automatic reader for reading the marks used to discriminate the class of samples passing the reader in transferring the sample containers, or for reading the analysis process starting position on the sample disk,

a control means having a function of controlling the sample container transferring mechanism, the sample dispenser, the reagent dispenser and the reaction container transferring mechanism automatically and sequentially, a function of receiving output data from the analyzer, computing the data on the basis of analysis parameters and registering the result of the computation in a predetermined storage area, a function of registering the classes of samples to be analyzed and analysis parameters such as required analysis items in a predetermined storage area in connection with the order of transfer of the sample containers by class, and a function of detecting signals of classes of samples from the automatic reader or finding the analysis process starting position on the sample disk, finding the order of transfer of the sample containers and then reading out the corresponding analysis parameters from the storage area so as to input said parameters into a computing section,

and a means for inputting and outputting the analysis parameters through a display screen.

A fourth problem-solving means relates to an apparatus used in the automatic analysis method of the second problem-solving means, wherein

a sample container transfer mechanism, a sample dispenser, reagent containers, a reagent dispenser, an analyzer, a reaction container transferring mechanism and an input/output means like in the same manner as in the third problem-solving means,

ID marks for discriminating the classes and numbers of the samples are attached to the sample containers, which ID marks are read by an automatic reader,

a control means is furnished with a function of registering analysis parameters in connection with the ID marks on each sample container instead of the marks representative of the classes of samples or the mark representative of the analysis starting position on the sample disk and the order of transfer of the sample containers, which are employed in the third problem-solving means, and a function of reading, out from a storage area the analysis parameters for the sample containers on the basis of signals of ID marks read by the automatic reader.

The function of the first problem-solving means is as follows:

When two or more classes of samples are analyzed (samples are held in sample container by class), and these sample containers are arranged in the order of the number which is attached in advance to the sample disk container, in the line of transferring mechanism or accommodated to the sample disk, (however, the classes of the sample containers may be arranged at random).

When the sample containers thus arranged are then transferred in order, the marks or mark representing the classes of the samples or the analysis process starting position are read by the automatic reader. When these marks or mark and the order of transfer of the sample containers are detected (the order of transfer of these containers is detected by counting the containers passing by, for example, a reader during a sample container transfer operation or detecting the number of the sample disk), the order of transfer regarding each class of samples of the sample containers can be known.

When the order of transfer of the containers holding different classes of samples is known, the address collation is carried out to enable the analysis parameters to be read out automatically from the corresponding storage area since the analysis parameters concerning each sample to be analyzed are set and stored in advance in connection with the order of transfer by class of the sample containers or the sample disks.

Accordingly, the analysis items to be actually carried out, the selection of reagents which suit these analysis items and the computation to be carried out can be controlled during an operation of the same system irrespective of the class of the samples, and the data on the result of the analysis (the result of measurement) can be registered on each storage area.

When sample containers holding various classes of samples are arranged in a transfer line or mounted on a stepping motor for moving the sample disk, they may be set at random irrespective of the class of the samples as long as the order regarding the class of samples of the sample containers is kept correctly. Namely, if the number of containers holding the same class of sample which have passed the counter during a container transfer operation is counted, the order of transfer regarding each class of samples of the sample containers is detected naturally even when these containers are set at random. Therefore, the arrangements of the sample containers to the transfer line or the sample disk are carried out at will.

Operation of the second problem-solving means is as follows:

The ID marks representative of the classes and numbers of the samples are attached to the sample containers. Accordingly, even when sample containers holding different classes of samples are arranged at random, the identity of the sample containers can be determined easily by reading the ID marks by the automatic reader.

Therefore, if the analysis parameters concerning a plurality of classes of samples to be analyzed are set and stored on a storage area in connection with these ID marks, the corresponding parameters can be read out from the storage area at the same time when the ID marks on the sample-holding containers are read.

Owing to these analysis parameters, the selection of the analysis items to be actually carried out, the selection of a reagent which suits the analysis items and the content of the computation to be carried out can be controlled during the operation of the same system such as a computer independent of the class of the samples in the same manner as in the first problem-solving means, and the data on the result of analysis (result of measurement) can be registered on each storage area.

Since the ID of the sample containers can be determined by reading the ID marks thereon, containers holding various classes of samples can be arranged on the transfer line regardless of the class of the samples and the order of the transfer of the sample containers, so that the operation of arranging sample containers becomes simpler.

With regard to the third and fourth problem-solving means, refer to the statement in the detailed description of the prepared embodiments mentioned later in which these means are described in detail.

BRIEF DESCRIPTION OF THE DRAWINGS

Fig. 1 is a general construction diagram of an analyzing system constructing one embodiment of the present invention;

Figs. 2A and 2B show sample racks attached sample identification marks thereon, respectively, in which sample containers are accommodated, and Fig. 2C shows one embodiment of the sample container on which a paper showing the identification mark concerning a class and number of position in the same class of the sample is attached;

Fig. 3 shows one embodiment of a registration of a system which is set through a screen of a display;

Fig. 4 shows one embodiment of a registration of parameters of analysis items which is set through the screen of the display;

Fig. 5 shows one embodiment of a registration of an analysis item which is set through the screen of the display, when the racks shown in Figs. 2A and 2B are used;

Fig. 6 shows one embodiment of a registration of an analysis item which is set through the screen of the display, when samples of different classes are accommodated in a sample disk shown in Fig. 11;

Fig. 7 shows one embodiment of a registration of analysis items for a standard sample which is set through the screen of the display;

Fig. 8 shows one embodiment of a registration of start condition which is set through the screen of the display;

Fig. 9 illustrates a reaction process monitor on which the result of an analysis is shown through the screen of the display;

Fig. 10 is a flow chart showing an operation of the embodiment of the present invention; and

Fig. 11 is a general construction diagram of an analysis system constructing other embodiment of the present invention.

DETAILED DESCRIPTION OF THE PREFERRED EMBODIMENTS

In the following explanation, descriptions are given with serum and urine as examples to be analyzed.

Referring to Fig. 1, a reference numeral 101 denotes containers holding samples. A plurality of sample containers 101 are set in a line in each of sample racks 102 (in this embodiment, five containers are set in one rack).

In each of the racks 102, a class of containers 101 holding one kind of sample are set. In this embodiment, sample containers concerning serum are set in one of a plurality of racks 102, and containers concerning urine in the other.

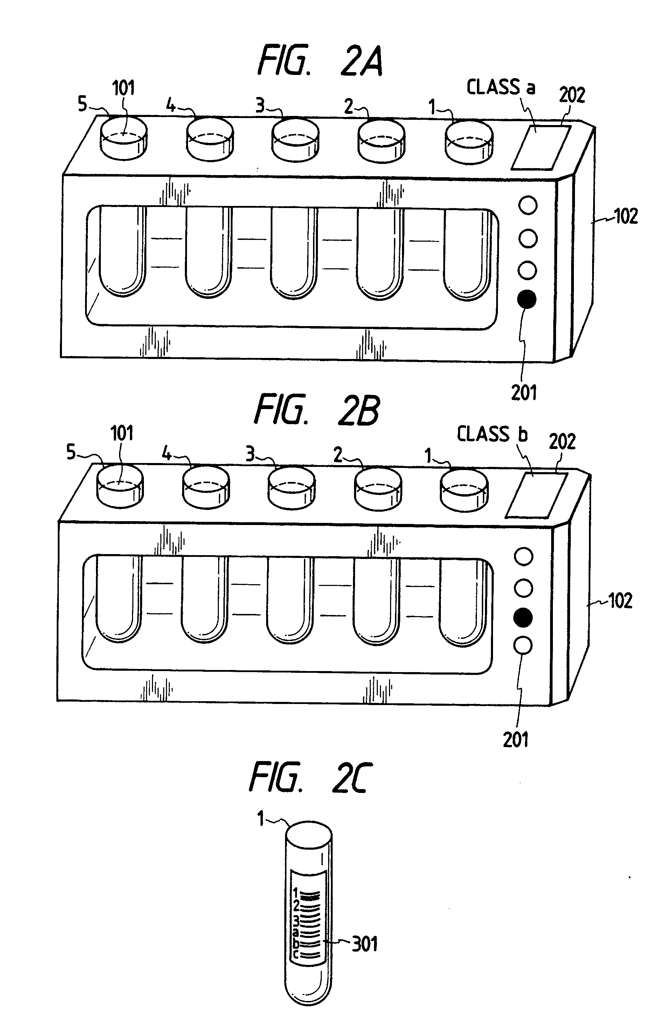

As shown in, for example, Figs. 2A and 2B, labels 202 are attached on the sample racks 102 so as to discriminate the class of the sample in one of them from that of the sample in the other. In this embodiment, class a (serum) is marked on the label 202 of one rack, and class b (urine) on the label 202 of the other. Racks of different colors may also be used instead of putting letters on these labels.

Each rack 102 is provided, in the portion which is on the side of the front end thereof with respect to the direction of advancing, with four holes 201 which are made on the assumption that the holes 201 represent four bits of binary notation, for the purpose of enabling the analyzing apparatus to automatically read the class of the racks (samples). In this embodiment, the holes in the lower portion corresponds lower-order bits. Among the bit holes, a non-through hole represents "0", and the through holes "1". The class a represents 0001, and the class b 0010, each of them corresponding to decimal numerals of "1" and "2", which represents the class a and class b, respectively.

The sample containers 101 in each rack 102 are arranged in order from the front end thereof (from 1 to 5 from the front end of the rack).

The racks 102 include some other classes of racks in addition to the above-mentioned sample racks the samples in which are to be analyzed such as control racks in which a control liquid holding containers are arranged, and calibration racks for use in preparing a reference calibration curve used for the measurement.

For example, a control sample rack is provided with bit holes indicating the class c. A calibration sample rack is provided with bit holes indicating the class d.

A reference numeral 103 denotes a rack transferring mechanism consisting of an intermittent feeding mechanism, and a plurality of sample racks 102 are mounted on a transfer line on this mechanism.

The sample racks 102 are placed on a belt in the rack transferring mechanism 103. The transferring mechanism 103 is controlled through an interface 104 by control signals from a computer (control unit) 105, and carries out intermittent feed operation.

A reference numeral 106 denotes an automatic optical reader for reading the bit holes (class of the content of the containers) 201 provided in the sample racks 102. This reader 106 consists, for example, of light-emitting elements composed of light-emitting diodes, and a light receiving element for passing or reflecting the light from the light-emitting element, and receive the secondary light, and a signal representative of the reception of the light (signal representative of what is read) is sent to the control unit 105 through the interface 104.

A reference numeral 107 denotes a turntable on which a plurality of reaction containers 108 are arranged in the circumferential direction thereof, and 109 a turntable on which a plurality of reagent containers 110A, 110B are arranged in two rows in the circumferential direction thereof, these turntables being provided close to the rack transferring mechanism 103.

The reaction containers 108 in the turntable 107 are housed in a reaction tank 111 connected to a constant-temperature tank 112.

Out of the two rows of reagent containers 110A, 110B on the reagent turntable 109, the containers 110A arranged on the outer side hold separately various kinds of reagents used for the inspection items for, for example, serum, while the containers 110B arranged on the inner side hold separately various kinds of reagents used for the inspection items for urine.

A sample dispensation probe 113 is provided between the rack transferring mechanism 103 and reaction container turntable 107, and a reagent dispensation probe 114 between the reaction container turntable 107 and reagent container turntable 109.

A reference numeral 115 denotes an agitating mechanism, 116 a multi-wavelength photometer for the use of analyzing samples, 121 a light source for the multi-wavelength photometer, and 117 a container cleaner.

The above sample dispensation probe 113, reagent dispensation probe 114, agitating mechanism 115, multi-wavelength photometer 116 and container cleaner 117 are arranged around the reaction container turntable 107 in the rotational direction thereof in the mentioned order.

A reference numeral 118 denotes a sample pipetter connected to the sample dispensation probe 113, 119 a pump for rinsing connected to the container cleaner 117, and 120 a reagent pipetter connected to the reagent dispensation probe 114.

The control unit 105 has a function of serially controlling the reaction container turntable 107, reagent turntable 109, sample dispensation probe 113, reagent dispensation probe 114, agitation mechanism 115, container cleaner 117, sample pipetter 118, pump for rinsing 119 and reagent pipetter 120 in addition to rack transferring mechanism 103.

To be concrete, the sample racks 102 are fed intermittently by the rack transferring mechanism 103. When the sample containers 101 set in the sample racks 102 are moved sequentially to a position under the sample dispensation probe 113, the sample in the sample containers 101 is sucked by a predetermined quantity via the sample probe 113 by the operation of the pipetter 118, and dispensed into the reaction containers 108. The reaction containers 108, after the dispensation of the sample, are moved in the reaction tank 111 to a reagent addition position by a feed operation of the turntable 107.

A reagent from a predetermined reagent container 110 is dispensed into the reaction containers having reached the reagent adding position, via the reagent dispensation probe 114 by the operation of the pipetter 120.

After the reagent has been added to the samples in the reaction containers 108, these containers 108 are moved to the position of the agitation mechanism 115 by a feed operation of the turntable 107, and the agitation of the contents of the containers is carried out. After the completion of this agitation operation, the reaction containers 108 passes through the beam emitted from the light source 121, and, during this time, the absorbance is detected by the multi-wavelength photometer 116. The signal of absorbance thus detected enters the computer 105 through an analog/digital converter 122 and interface 104, and is converted into the actual concentration of the sample. The data after the concentration-conversion are printed by a printer 123 through the interface 104 or displayed on a display screen of a CTR 124, and stored in a hard disk 125.

A reaction container 108 to which a photometric operation is completed is moved to the position of the cleaner 117, and the liquid therein is discharged by the container cleaning pump 119. The container 108 is then washed with water and used for a subsequent analysis operation.

The control unit 105 has a function of computing on the basis of analysis parameters the measurement data inputted thereinto through the multi-wavelength photometer 16, A/D converter 122 and interface 104, and obtaining the inspection result, a function of setting storage areas for the samples on the hard disk 125 and storing the inspection result therein, and a function of calling the data from the hard disk 125 as necessary and outputting the same to the printer 123 or CRT 124, in addition to the function of reading a signal from the automatic reader 106.

A control program (initial program) for systematically operating the analyzing apparatus as a whole and various kinds of analysis parameters corresponding to the various classes of samples inputted by the operation of a keyboard 126 through the screen of the CRT are registered (stored) on the hard disk 125. These analysis parameters are stored in a predetermined area in connection with the respective sample containers 101.

The contents of the analysis parameters will be described later.

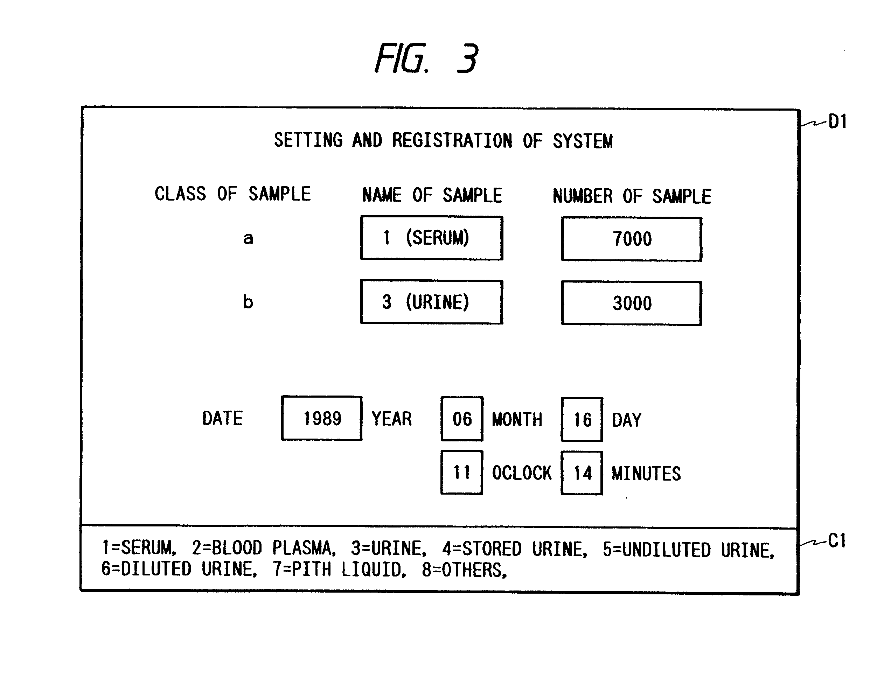

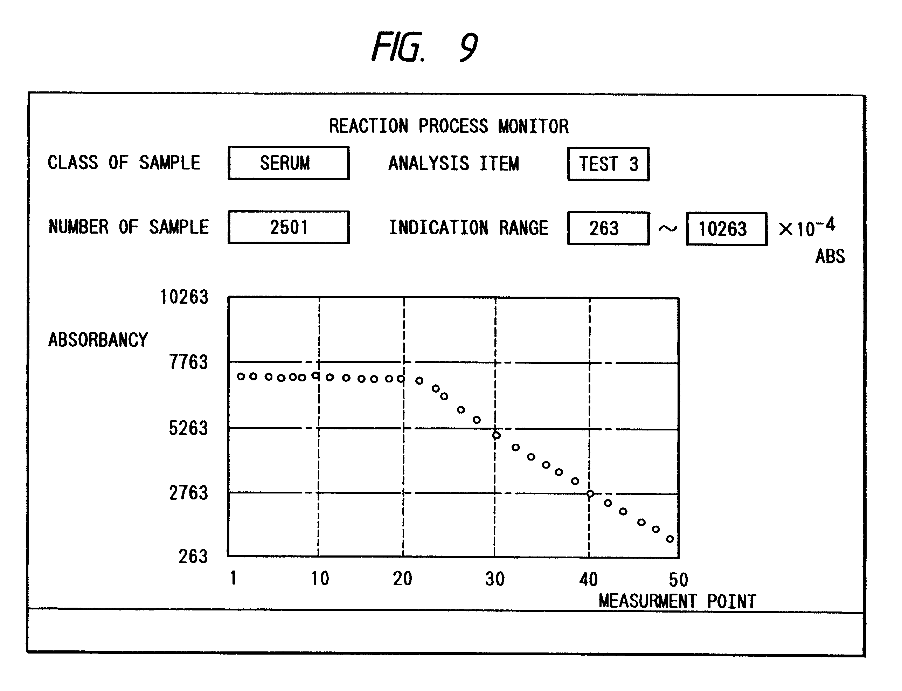

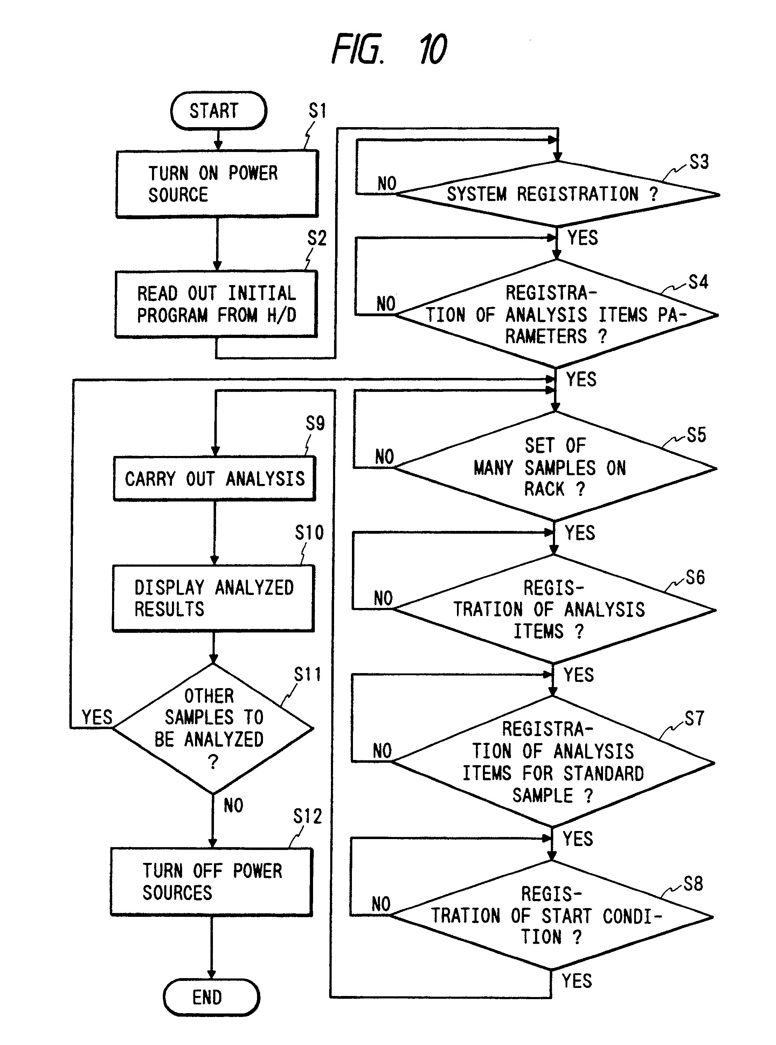

The operation of this embodiment will now be described with reference to the various kinds of parameters shown in Figs. 3-5, 7 and 8, an output monitor of Fig. 9 and a flow chart of Fig. 10.

The reference symbols S1-S12 in Fig. 10 denote analysis steps. When the power source of the apparatus is turned on as shown by S1 in the same drawing, the initial program and previously-set analysis parameters required for the analysis and various kinds of operating sections are read out from the hard disk (H/D) 125 and inputted (S2) into the computer 105, and preparation for carrying out an analysis are made to put the apparatus in the state of standby for an analysis operation.

When it is necessary to alter or newly prepare the analysis parameters, the setting of various kinds of analysis parameters 1-5 shown below is done as follows through the display screen of the CRT display 124 by operating the keyboard 126. In steps 3 to 8, it is discriminated whether following analysis parameters 1-5 are registered to the memory. The order of the steps 5 and 6 is exchangeable in the flow chart. However, when the analysis parameters already inputted by using the respective predetermined screen are not required to alter, it is not necessary to reset them.

1. Setting and registration of system (S3).

2. Registration of parameters of the analysis (inspection)items of the system as a whole (S4).

3. Registration of analysis items for each sample (S6).

4. Registration of analysis items for a standard sample (S7).

5. Registration of the start condition (S8).

In the setting and registration of the system in S3, the classes of the samples to be analyzed during the operation of the analysis system are set, and, to be concrete, the names and numbers corresponding to the classes a, b of the samples, and the time and date of setting are inputted as shown in Fig. 3. The name and number of each class of sample are inputted through the same screen D1 of the display 124. Regarding the name of sample, a proper name is inputted by selecting the number representing one among names shown in a comment column C1 of the screen D1. If the name of the class of an object sample is not shown in the comment column C1, or when an operator wants to change the name of the class of sample shown in the column C1 to another, the operator has to select "8 = others" and input a new name.

In this embodiment, a number "1" corresponding to serum is inputted as the class a, and a number "3" corresponding to urine as the class b.

The maximum number of each class of sample is also inputted. The inputted names and numbers of samples are stored in the hard disk 125.

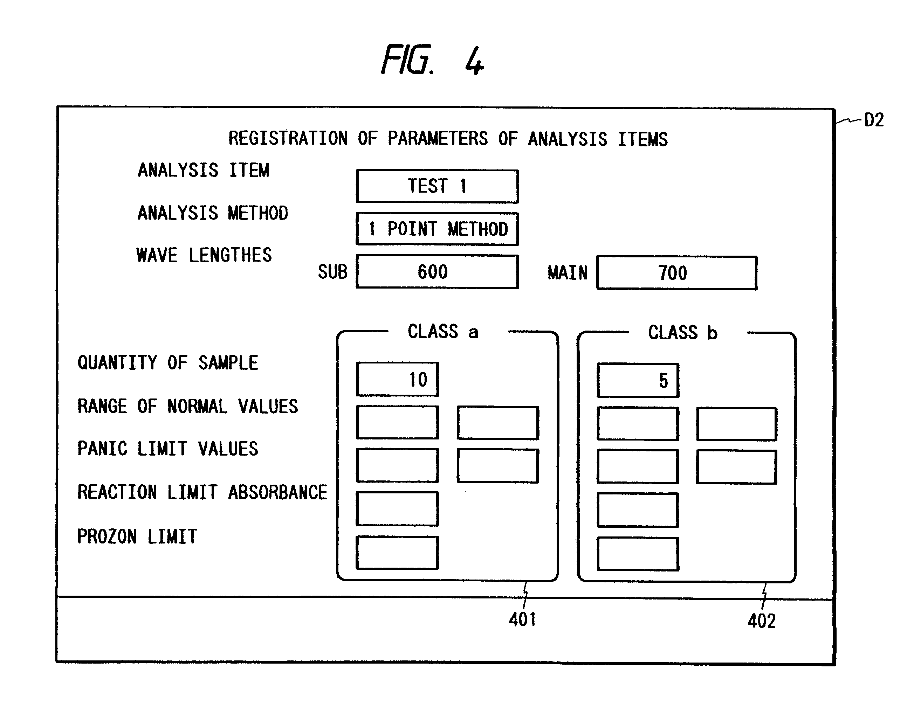

The registration of parameters of the analysis items, which is executed in item 2 mentioned above is carried out by using a screen D2 as shown in Fig. 4. In this case, parameters for analysis items concerning each class of samples are also inputted.

First, an analysis item is inputted ("Test 1" is displayed in the drawing but, in practice, a concrete name of substance to be examined, for example, total protein, bilirubin, creatine, GOT, GPT or amylase is inputted), and an analysis method and a measuring wavelength to be used in the analysis are set. The parameters referred to above do not depend upon the class of the sample but the following parameters vary depending upon the class of samples.

1 . Quantity of specimen ... The quantity ($\mu \ell$) of sample sucked into and discharged from the sample dispensation probe is in!putted.

2. Range of normal values ... The normal lower and upper limit values for the measurement items are inputted.

3. Panic limit values ... The abnormal lower and upper limit values for the measurement items are inputted.

4. Reaction limit absorbance ... The reaction limit absorbance of a matrix used in measurement by rate assay is inputted.

5. Prozone limit value ... The reaction limit absorbance for an antigen-antibody reaction is inputted.

These parameters 1-5 are set in the input areas 401, 402 for the class a and class b.

The registration of the analysis items for each sample is then carried out in item 6 corresponding to S6. Various classes of samples are set in the racks 102 in advance in item 5 corresponding to S5, and a number is allotted to each sample, the analysis items being set in order correspondingly to the sample numbers. Thus, the sample numbers are allotted in order by class of samples. The order of setting the racks may be determined regardless of the class of samples, i.e., it may be arbitrarily determined. However, regarding the same sample, the order of transfer of the racks and the order of setting the sample containers in the racks (from 1 to 5 from the front end portion of a rack) have to be kept orderly.

It is also possible to attach an ID number to each specimen as shown in Fig. 2C and read the class such as a, b and c and number such as 1, 2 and 3 of each sample by using a reader. In this case, the sample containers can be set in the racks arbitrarily, i.e., in no particular order. In order to carry out calibration (obtain a calibration curve of a standard sample), standard liquid is set in a calibration sample rack. .

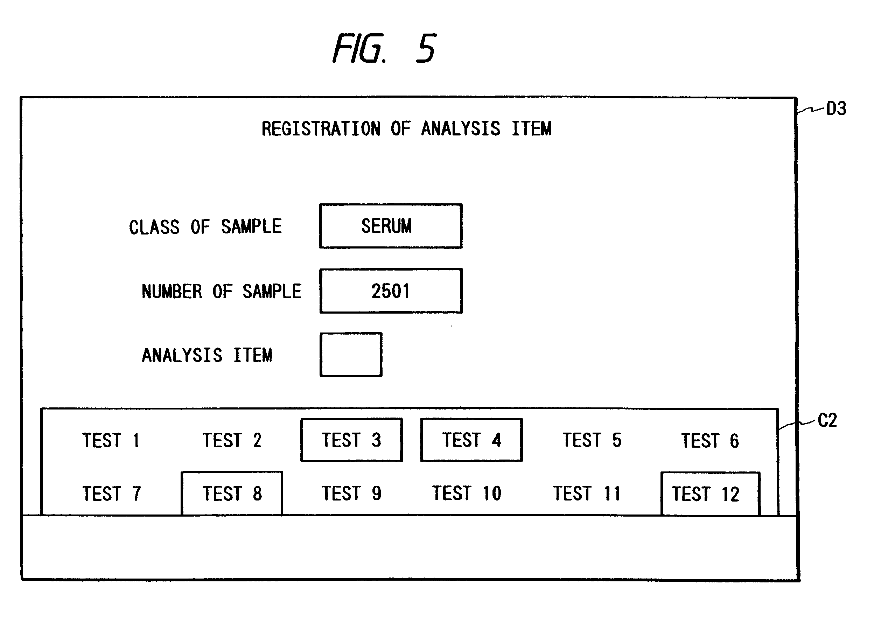

The registration of analysis items in item 6 corresponding to S6 in the flow chart is carried out as follows. The identity marks (representative of the class and number) of each sample are inputted by using an inspection display screen D3 shown in Fig. 5, and the analysis items to be carried out for an object sample are selected from a display area C2 in which the analysis items are tabulated, and the selected analysis items are inputted (although the display area C2 in Fig. 5 shows "Test 1, Test 2, Test 3 ...", concrete names of examination are shown thereon in practice). The inputted analysis items are displayed in the display area C2 with the background color changed.

The screen D3 is used in common for the registration and inputting of analysis items for each sample. On this screen, the class and number of samples and the analysis items therefor are rewritten in order, and these data are stored id the rewriting order on each registration (storage) area in the hard disk 125.

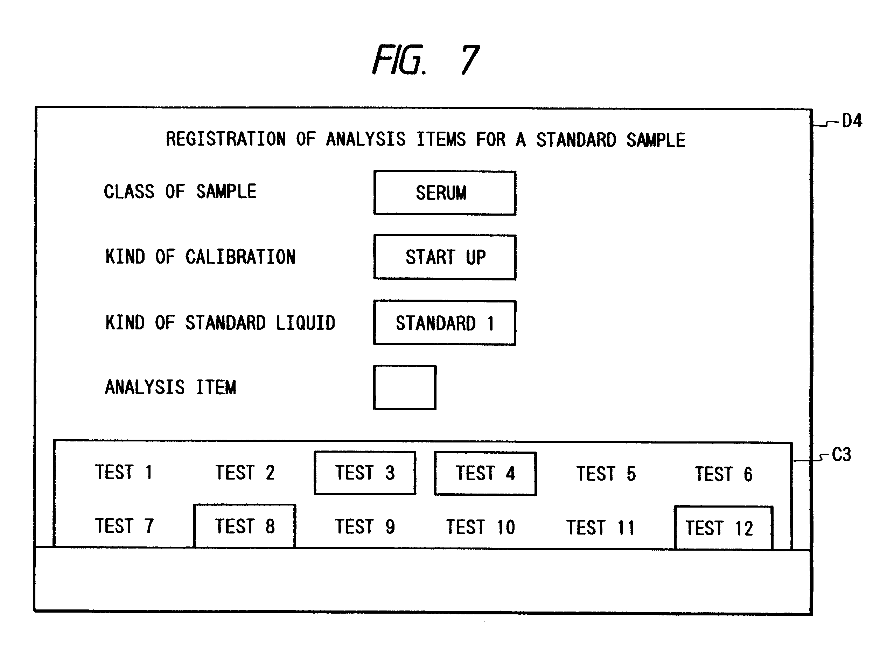

The registration of inspection items for a standard sample in item 7 corresponding to S7 in the flow chart is carried out by inputting them through a screen D4 shown in Fig. 7.

These inspection items are representative of the practicing of the preparation of a so-called calibration curve, and the inspection measurement values concerning the practical analysis data on a sample are computed by using the calibration curve of the standard sample.

The calibration curve also need to be registered by class of samples, and can be set by rewriting through the same screen by using a standard sample analysis item registration screen D4 shown in Fig. 7, the calibration curves rewritten being stored in order in the hard disk 125.

The registration of calibration curves is carried out by inputting the class of sample, inputting the kind of calibration curve, "START UP", (setting of calibration curves at the beginning) or "RECAB" (resetting of calibration curves in the middle of an analysis operation)), selecting the kind of standard sample from 1 st to 6th liquids and inputting the selected liquid, and selecting one of calibration analysis items in the display area C3 (which corresponds to the above-mentioned display areas C1, C2) and inputting the selected analysis items. The inputted analysis items are displayed on the display area C3 with the background color thereof changed.

In this embodiment, calibration is carried out for every class of sample, and measurement result is outputted in the form of calibration curves corresponding to the class of samples. For example, when the same class of samples diluted at different rates and the same quantity of the same reagent are used, calibration may be carried out in one operation since the same calibration curve can be used if computation result is corrected by using the quantity of the samples as the correction parameter.

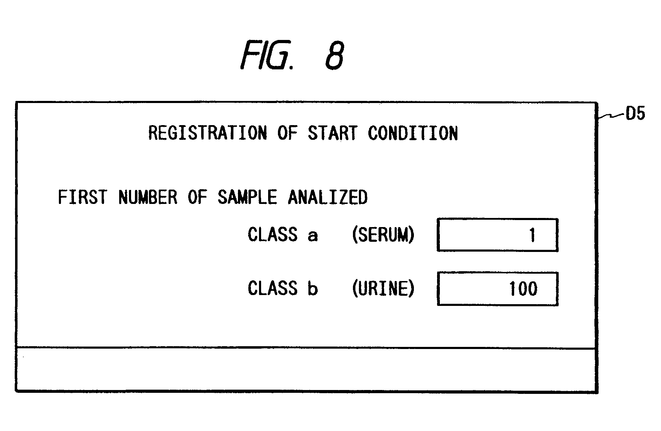

An analysis is carried out in practice after such various kinds of analysis parameters are set and inputted. Before the analysis is started, the starting conditions are registered corresponding to step 8 through display screen D5 as shown in Fig. 8.

Namely, the first number of the sample to be analyzed is inputted through the starting condition registration screen, and this first number and the number of the first sample to be analyzed in practice are matched. These starting condition is also stored in the hard disk 125.

After these analysis parameters are registered, a series of analysis steps are carried out corresponding to step 9.

When it is necessary to carry out a calibration operation before the analysis is started, a container holding a standard sample is set in a rack. A calibration operation is then carried out on the basis of the analysis parameters (standard sample analysis items) set corresponding to step 7 prior to the practical analysis of object sample.

When the rack in which standard sample containers are set is sent out by the transferring mechanism 103, the bit symbols representing the rack number are read by the automatic reader 106. With reference to these bit symbols and the setting order of the reference sample, the corresponding analysis parameters (standard sample analysis items) set by the control unit corresponding to step 7 are read out from the hard disk 125.

The reagent dispensation probe 114 is then controlled so that the corresponding reagent is added to the sample dispensed into the reaction containers by the dispenser 113, and the sample is stirred by the wash mechanism 115 and analyzed by the multi-wavelength photometer 116. A calibration curve is prepared on the basis of the measurement result, and registered. The reaction containers are washed by the cleaner 117 after the measurement and then used as reaction containers for subsequent samples.

After a calibration operation is completed, the analysis of samples is actually carried out.

When the sample racks 102 are arranged by class in the order of the sample numbers and transferred by the rack transferring mechanism 103, they pass the reader 106, and the kinds of the racks are detected by the control unit 105 on the basis of signals from the reader 106. When the samples (sample containers) 101 set in the racks reaches the sample dispensation probe 113, the sample number and the order of transfer by class are counted. If there are no sample, the counting is not done.

When the sample number (order of transfer) by class is detected, the analysis parameters corresponding thereto are read out from the hard disk 125 by the control unit 105.

In accordance with these analysis parameters, the dispensation of a reagent by class is carried out, and the data obtained by an analysis carried out by the multi-wavelenth photometer 116 are computed, the result of the computation being processed as measurement result (inspection result). The data of each sample are registered in the hard disk 125. The above process is carried out repeatedly until the sample to be analyzed runs out.

The data on each class of samples, which are obtained after the completion of the analysis, are printed by the printer 123. These data are also shown graphically on the reaction process monitoring screen shown in Fig. 9.

In this embodiment, it is unnecessary to provide different analyzing apparatuses for different classes of samples when a plurality of classes of samples are analyzed. A plurality of classes of samples can be analyzed during the operation time of the same system, and addition and rewriting of the analysis parameters can be done through the same screen for registration. Consequently, an excessively large equipment investment can be prevented, the analysis parameter setting time can be reduced, and the operation efficiency of the system as a whole can be improved.

Even when the sample racks, wherein different classes of samples are set in different racks, are arranged at random, the analysis parameters therefore are read out correctly, so that it is not necessary to pay attention to the order of the racks of different classes of samples are set. In addition, even when a different class of sample is newly added, the order of transfer of such class of sample can be added as it is. Therefore, the arrangement of the racks in the transfer line can be done simply, and the operation efficiency can be improved.

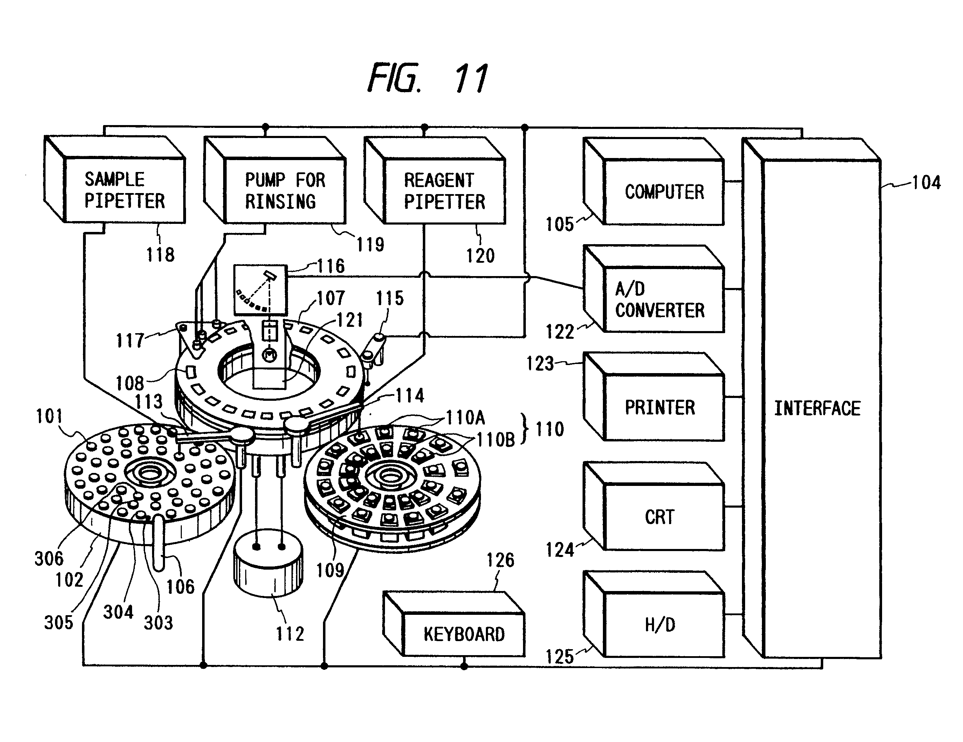

The difference between the apparatus shown in Fig. 1 and that shown in Fig. 11 is as follows:
The samples shown in Fig. 1 are accommodated in the sample racks 102 to which the identification marks 201 are attached. And the sample racks 102 are carried by the rack transferring mechanism 103. On the other hand, the samples shown in Fig. 11 are classified by classes or kinds of samples in each sample disk 102.

The sample disk 102 has the sample containers 304, the control sample containers 305 and the standard sample containers 306, respectively, around the center thereof. The sample disk is attached a mark 303 showing an analysis process starting position of the samples thereon. The analysis of the sample is started by reading the analysis process starting position by the sample reader 106. The sample disk is rotated intermittently by the distance of the neighboring samples using a step motor (not shown).

The analysis procedure of the apparatus shown by Fig. 11 is the same as that shown by Fig. 1.

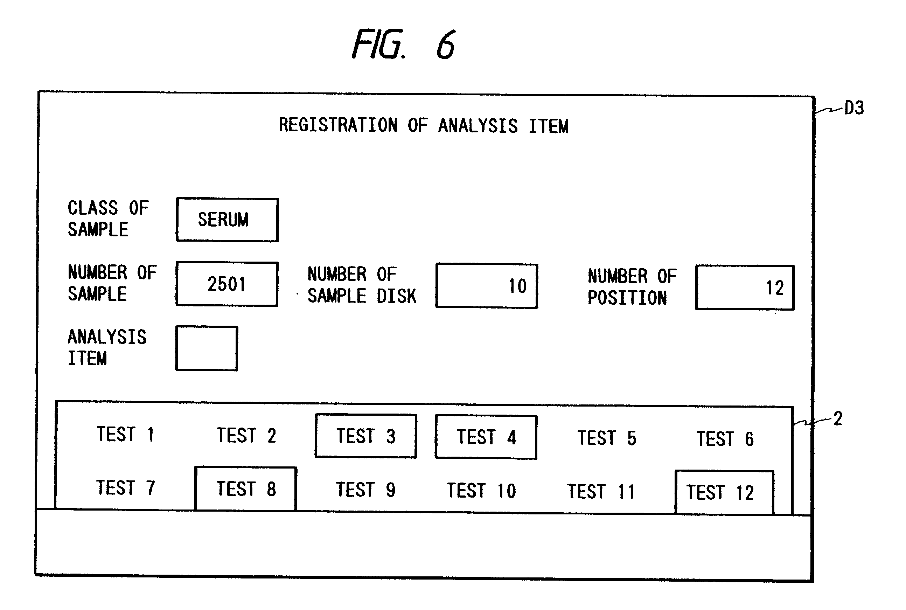

By attaching the identification mark shown in Fig. 2C to the sample containers, the above-mentioned analysis process starting position can be omitted from the sample disk. In this case, different class of the samples can be mounted on the same disk, and the registeration of the analysis item is taken place in the manner shown in Fig. 6.

The above embodiment is described taking a clinical biochemical inspection system as an example. The analysis system of the present invention is not limited to this system; it can also be utilized in various kinds of fields of measurement. In this embodiment, a hard disk is used as a storage device, which may also be substituted by a floppy disk.

According to the present invention described above, the whole of sample analysis from the transferring of a plurality of classes of samples held separately in different containers to the registering of the measurement data based on the result of the analysis thereof is automatically performed during the operation time of the same system. Therefore, an automatic analysis system not requiring an excessively large equipment investment, and having a high operation efficiency can be obtained. Moreover, the arranging of sample containers on the transfer line is under few limitation, and the efficiency of an analysis operation can be improved.

According to the present invention, the parameters of different class samples can be registered through the same screen of the display corresponding to the registerations shown in the steps 3, 4, 6-8 in Fig. 9. At the same time, the results of the analysises of the samples can be displayed on the same screen of the display in the manner shown in Fig. 9 without relating to the classes of the samples to be analyzed. Therefore, the comparison between the different class samples becomes convenient.

**Claims**

1. An automatic analysis method in which a series of steps are successively performed comprising transferring a plurality of sample containers (101) sequentially in a line, dispensing a sample from the sample containers into reaction containers (108) according to an order of a transfer of the sample containers, dispensing a reagent (110) into the reaction containers, analyzing the sample after a reaction thereof, inputting data on a result of an analysis, computing the data on a basis of predetermined analysis parameters, and storing the result of a computation of the data

characterized in that the method comprises steps of

accommodating samples to be analyzed in one operation of the analysis to said sample containers dividing into classes which belong to same kinds, respectively,

putting marks representative of said classes of said samples on racks (102) each holding a class of sample containers by kind,

reading said marks by an automatic reader prior to a starting of analysis processes of said samples and distinguishing an order of a transfer of said classes of said sample containers sent by a transfer line on which said racks are mounted,

distinguishing in advance whether analysis parameters (S3, S4, S6-8) concerning said samples to be analyzed are stored to a memory (105) with respect to said classes, and

reading out said analysis parameters relating to analysises of said samples from said memory after a transfer order of said classes of said sample containers is found, selecting the reagents to be dispensed into said reaction containers based on said analysis parameters, selecting analysis items of said samples, computing said data on the results of the analysises, and registering the results of the computation.

2. An automatic analysis method according to claim 1, wherein an arrangement order of said sample containers in each class is previously stored in said memory.

3. An automatic analysis method in which a series of steps are successively performed comprising transferring a plurality of sample containers sequentially in a line, dispensing a sample from the sample containers into reaction containers according to an order of a transfer of the sample containers, dispensing a reagent into the reaction containers, analyzing the sample after a reaction thereof, inputting data on a result of an analysis, computing the data on a basis of predetermined analysis parameters, and storing the result of a computation of the data

characterized in that the method comprises steps of

accommodating samples to be analyzed in one operation of the analysis to said sample containers,

putting identity marks representative of classes which belong to same kinds and series numbers of said samples in each class container to said sample containers, and reading before a sample analyzing process starts said identity marks sequentially by an automatic reader,

distinguishing in advance whether analysis parameters concerning said samples to be analyzed are stored to a memory (105) with respect to said classes, and

reading out said analysis parameters relating to analysises of said samples from said memory after said identity marks of said sample containers are read out by said automatic reader, selecting the reagents to be dispensed into said reaction containers based on said analysis parameters, selecting analyses items of said samples, computing said data on the results of the analysises, and registering the results of the computation.

4. An automatic analysis method according to claim 1, wherein said registering of said analysis parameters to said memory is done through a screen of a display (124), and said registering of said analysis parameters to said memory concerning said samples in each class is done through the screen of said display.

5. An automatic analysis method according to claim 2, wherein said registering of said analysis parameters to said memory is done through a screen of a display, and said registering of said analysis parameters to said memory concerning said samples in each class is done through the screen of said display.

6. An automatic analysis method according to claim 3, wherein said registering of said analysis parameters to said memory is done through a screen of a display, and said registering of said analysis parameters concerning said samples in each class is done through the screen of said display.

7. An automatic analysis method in which a series of steps are successively performed comprising transferring a plurality of sample containers, dispensing a sample from the sample containers into reaction containers, dispensing a reagent into the reaction containers, analyzing the sample after a reaction thereof, inputting data on a result of an analysis, computing the data on a basis of predetermined analysis parameters, and storing the result of a computation of the data

characterized in that the method comprises steps of

dividing samples to be analyzed in one operation of the analysis into classes which belong to same kinds, respectively, and accommodating the samples to a sample disk which has a mark showing a starting position of the analysis processes,

reading said mark by an automatic reader prior to a starting of said analysis processes of said samples,

distinguishing in advance whether analysis parameters concerning said samples to be analyzed are stored to a memory with respect to said classes, and

reading out said analysis parameters relating to the analysises of said samples from said memory after said starting position is distinguished, selecting the reagents to be dispensed into said reaction containers based on said analysis parameters, selecting analysis items of said samples, computing said data on the results of the analysises in an order of the sample which is arranged in said starting position to a next sample arranged on said sample disk, and registering the result of said computation.

8. An automatic analysis method according to claim 7, wherein transferring of said sample is carried out by means for rotating said sample disk by a distance corresponding to that between neighboring two samples arranged on said sample disk.

9. An automatic analysis method in which a series of steps are successively performed transferring a plurality of sample containers, dispensing a sample from the sample containers into reaction containers, dispensing a reagent into the reaction containers, analyzing the sample after a reaction thereof, inputting data on a result of an analysis, computing the data on a basis of predetermined analysis parameters, and storing the result of a computation of the data

characterized in that the method comprises steps of

accommodating samples to be analyzed in one operation of the analysis to a sample disk which has a mark showing a starting position of the analysis processes,

reading said mark by an automatic reader prior to a starting of said analysis processes of said samples,

distinguishing in advance whether analysis parameters concerning said samples to be analyzed are stored to a memory with respect to classes which belong to same kinds, respectively, and

reading out said analysis parameters relating to the analysises of the sample which is accommodated in a position having a position number counted from said mark on said sample disk after said starting position is distinguished, selecting the reagents to be dispensed into said reaction containers based on said analysis parameters, selecting analysis items of said samples, computing said data on the results of the analysises in an order of the sample which is arranged in said starting position to a next sample arranged on said sample disk, and registering the results of said computation.

10. An automatic analysis method according to claim 9, wherein transferring of said sample is carried out by means for rotating said sample disk by a distance corresponding to that between neighboring two samples arranged on said sample disk.

11. An automatic analysis method in which a series of steps are successively performed comprising transferring a plurality of sample containers, dispensing a reagent into the reaction containers, analyzing the sample after a reaction thereof, inputting data on a result of an analysis, computing the data on a basis of predetermined analysis parameters, and storing the result of a computation of the data

characterized in that the method comprises steps of

putting samples to be analyzed in one operation of the analysis into said sample containers and accommodating the sample containers to said sample disk, respectively,

putting identity marks representative of classes which belong to same kinds, respectively, and series numbers of said samples in each class container, and reading before a sample analyzing process starts said identity marks sequentially by an automatic reader,

distinguishing in advance whether analysis parameters concerning said samples to be analyzed are stored to a memory with respect to said identity marks to a memory with respect to said identity marks, and

reading out said analysis parameters relating to analysises of said samples from said memory after said identity marks of said sample containers are read out by said automatic reader, selecting the reagents to be dispensed into said reaction containers based on said analysis parameters, selecting analysis items of said samples, computing said data on the results of the analysises, and registering the results of the computation.

12. An automatic analysis method according to claim 7, wherein said registering of said analysis parameters to said memory is done through a screen of a display, and said registering of said analysis parameters to said memory concerning said samples in each class is done through the screen of said display.

13. An automatic analysis method according to claim 8, wherein said registering of said analysis parameters to said memory is done through a screen of a display, and said registering of said analysis parameters to said memory concerning said samples in each class is done through the screen of said display.

14. An automatic analysis method according to claim 9, wherein said registering of said analysis parameters to said memory is done through a screen of a display, and said registering of said analysis parameters to said memory concerning said samples in each class is done through the screen of said display.

15. An automatic analysis method according to claim 11, wherein said registering of said analysis parameters to said memory is done through a screen of a display, and said registering of said analysis parameters to said memory concerning said samples in each class is done through the screen of said display.

16. An automatic analysis apparatus which calculates analyzed data of each sample based on predetermined analysis parameters
characterized in that the apparatus comprises
a sample container transferring means (103) for feeding a plurality of sample containers intermittently in a line,
a sample dispenser (113) for dispensing the sample in said sample containers transferred sequentially into each of reaction containers (107),

a group of reagent containers (109) holding reagents which correspond to analysis items of samples having two or more kinds of classes to be analyzed,

a reagent dispenser (114) for selecting a corresponding relative reagent from reagent containers and dispensing a selected reagent into said reaction containers,

an analyzer (116) for analyzing said samples in said reaction containers after a reagent dispensation operation is completed,

a reaction container transferring means (107) for transferring said reaction containers,

racks (102) which attach sample class identification marks for accommodating said samples to said sample containers in each group of classes,

an automatic reader for reading said sample class identification marks passing through the reader during a transfer of said sample containers,

a calculator (105) which calculates analyzed data of each sample based on predetermined analysis parameters,

racks (102) attached identification marks representing classes of said samples to said sample containers, and

an automatic reader (106) for reading said marks used to identify the class of samples passing said reader in transferring said sample containers,

a control means for computing said data from said analyzer on a basis of analysis parameters to obtain analyzed components of said samples, registering results of computation of said data to a memory (105), registering classes of samples to be analyzed and analysis parameters of required analysis items in connection with an order of transfer of said sample containers by class of said sample, and reading out analysis parameters from the memory corresponding to signals concerning the classes from said automatic reader and reading out analysis parameters from the memory corresponding to signals concerning the classes from said automatic reader and the order of transfer of the classes of said sample containers so as to control said sample container transferring means, said sample dispenser, said reagent dispenser and said reaction container transferring means automatically and seqentially, and

means for inputting and outputting said analysis parameters through a key board (126) and a display (124).

17. Automatic analysis apparatus which calculates analyzed data of each sample based on predetermined analysis parameters

characterized in that the apparatus comprises

a sample container transferring means for feeding a plurality of sample containers intermittently in a line,

a sample dispenser for dispensing the sample in said sample containers transferred sequentially into each of reaction containers,

a group of reagent containers holding reagents which correspond to analysis items of samples having two or more kinds of classes to be analyzed,

a reagent dispenser for selecting a corresponding relative reagent from reagent containers and dispensing a selected reagent into said reaction containers,

an analyzer for analyzing said samples in said reaction containers after a reagent dispensation operation is completed,

a reaction container transferring means for transferring said reaction containers,

racks for accommodating said sample containers attached identity marks (301) representative of classes which belong to same kinds and series numbers of said samples in each class container,

an automatic reader for reading said identity marks passing through the reader during a transfer of said sample containers,

a control means for computing said data from said analyzer on a basis of analysis parameters to obtain analyzed components of said samples, registering results of computations of said data to a memory, registering classes of samples to be analyzed and analysis parameters of required analysis items in connection with said identity marks of said sample containers, and reading out analysis parameters from the memory corresponding to the reading signals of said identity marks from said automatic reader so as to control said sample container transferring means, said sample dispenser, said reagent dispenser and said reaction container transferring means automatically and sequentially, and

means for inputting and outputting said analysis parameters through a key board and a display.

18. An automatic analysis apparatus according to claim 16, wherein said display has a function of registering the analysis parameters concerning each analysis item about said samples in said sample containers by rewriting the analysis items for every sample container on a same display screen.

19. An automatic analysis apparatus according to claim 17, wherein said display has registering means which indicates analysis parameters concerning each analysis item about said samples in said sample containers by rewriting the analysis items for every sample container on a same display screen.

20. An automatic analysis apparatus which calculates analyzed data of each sample based on predetermined analysis parameters

characterized in that the apparatus comprises

a sample disk (102) which accommodates samples in sample containers thereon, is rotated intermittently and is attached a mark thereon corresponding to analysis process starting position of the samples

a sample dispenser for dispensing the sample in said sample containers into each of reaction containers,

a group of reagent containers holding reagents which correspond to analysis items of samples having two or more kinds of classes to be analyzed,

a reagent dispenser for selecting a corresponding relative reagent from reagent containers and dispensing a selected reagent into said reaction containers,

an analyzer for analyzing said samples in said reaction containers after a reagent dispensation operation is completed,

a reaction container transferring means for transferring said reaction containers,

an automatic reader for reading said marks passing through the reader during a transfer of said sample containers,

a control means for computing said data from said analyzer on a basis of analysis parameters to obtain analyzed components of said samples, registering results of computations of said data to a memory, and reading out analysis parameters from the memory so as to control said sample disk, said sample dispenser, said reagent dispenser and said reaction container transferring means automatically and sequentially, and

means for inputting and outputting said analysis parameters through a key board and a display.

21. An automatic analysis apparatus which calculates analyzed data of each sample based on predetermined analysis parameters

characterized in that the apparatus comprises

a sample disk which accommodates samples in sample containers attached identity marks relating to classes of said samples and numbers of said sample containers and is rotated intermittently,

a sample dispenser for dispensing the sample in said sample containers into each of reaction containers,

a group of reagent containers holding reagents which correspond to analysis items of samples having two or more kinds of classes to be analyzed,

a reagent dispenser for selecting a corresponding relative reagent from reagent containers and dispensing a selected reagent into said reaction containers,

an analyzer for analyzing said samples in said reaction containers after a reagent dispensation operation is completed,

a reaction container transferring means for transferring said reaction containers,

an automatic reader for reading said identity marks passing through the reader during a transfer of said sample containers,

a control means for computing said data from said analyzer on a basis of analysis parameters to obtain analyzed components of said samples, registering results of computations of said data to a memory, registering classes of samples to be analyzed and analysis parameters of required analysis items in connection with said identity marks of said sample containers, and reading out analysis parameters from the memory corresponding to the reading signals of said identity marks from said automatic reader so as to control said sample disk, said sample dispenser, said reagent dispenser and said reaction container transferring means automatically and sequentially, and

means for inputting and outputting said analysis parameters through a key board and a display.

22. An automatic analysis apparatus according to claim 20, wherein said display has a function of registering the analysis parameters concerning each analysis item about said samples in said sample containers by rewritting the analysis items for every sample container on a same display screen.

23. An automatic analysis apparatus according to claim 21, wherein said display has a function of registering the analysis parameters concerning each analysis item about said samples in said sample containers by rewriting the analysis items for every sample container on a same display screen.

FIG. 1

| Label | Reference |
|---|---|
| SAMPLE PIPETTER | 118 |
| PUMP FOR RINSING | 119 |
| REAGENT PIPETTER | 120 |
| COMPUTER | 105 |
| A/D CONVERTER | 122 |
| PRINTER | 123 |
| CRT | 124 |
| H/D | 125 |
| INTERFACE | 104 |
| KEYBOARD | 126 |

101, 102, 103, 106, 107, 108, 109, 110, 110A, 110B, 111, 112, 113, 114, 115, 116, 117, 121

# FIG. 2A

# FIG. 2B

# FIG. 2C

# FIG. 3

EP 0 445 616 A2

SETTING AND REGISTRATION OF SYSTEM ⌐D1

| CLASS OF SAMPLE | NAME OF SAMPLE | NUMBER OF SAMPLE |
|---|---|---|
| a | 1 (SERUM) | 7000 |
| b | 3 (URINE) | 3000 |

DATE  1989 YEAR  06 MONTH  16 DAY

11 OCLOCK  14 MINUTES

1=SERUM, 2=BLOOD PLASMA, 3=URINE, 4=STORED URINE, 5=UNDILUTED URINE, ⌐C1
6=DILUTED URINE, 7=PITH LIQUID, 8=OTHERS.

# FIG. 4

REGISTRATION OF PARAMETERS OF ANALYSIS ITEMS — D2

ANALYSIS ITEM

| TEST 1 |

ANALYSIS METHOD

| 1 POINT METHOD |

WAVE LENGTHES

SUB | 600 |    MAIN | 700 |

### CLASS a (401)

QUANTITY OF SAMPLE | 10 |

RANGE OF NORMAL VALUES

PANIC LIMIT VALUES

REACTION LIMIT ABSORBANCE

PROZON LIMIT

### CLASS b (402)

| 5 |

EP 0 445 616 A2

## FIG. 5

REGISTRATION OF ANALYSIS ITEM  — D3

CLASS OF SAMPLE     SERUM

NUMBER OF SAMPLE     2501

ANALYSIS ITEM

— C2

| TEST 1 | TEST 2 | TEST 3 | TEST 4 | TEST 5 | TEST 6 |
| TEST 7 | TEST 8 | TEST 9 | TEST 10 | TEST 11 | TEST 12 |

EP 0 445 616 A2

# FIG. 6

REGISTRATION OF ANALYSIS ITEM — D3

CLASS OF SAMPLE: SERUM

NUMBER OF SAMPLE: 2501    NUMBER OF SAMPLE DISK: 10    NUMBER OF POSITION: 12

ANALYSIS ITEM: [ ]

| | | | | | |
|---|---|---|---|---|---|
| TEST 1 | TEST 2 | TEST 3 | TEST 4 | TEST 5 | TEST 6 |
| TEST 7 | TEST 8 | TEST 9 | TEST 10 | TEST 11 | TEST 12 |

2

EP 0 445 616 A2

## FIG. 7

REGISTRATION OF ANALYSIS ITEMS FOR A STANDARD SAMPLE   ⌐D4

CLASS OF SAMPLE            | SERUM |

KIND OF CALIBRATION       | START UP |

KIND OF STANDARD LIQUID    | STANDARD 1 |

ANALYSIS ITEM             | |

⌐C3

| TEST 1 | TEST 2 | TEST 3 | TEST 4 | TEST 5 | TEST 6 |
| TEST 7 | TEST 8 | TEST 9 | TEST 10 | TEST 11 | TEST 12 |

EP 0 445 616 A2

## FIG. 8

REGISTRATION OF START CONDITION

FIRST NUMBER OF SAMPLE ANALIZED

CLASS a    (SERUM)    | 1 |

CLASS b    (URINE)    | 100 |

— D5

## FIG. 9

REACTION PROCESS MONITOR

CLASS OF SAMPLE [ SERUM ]   ANALYSIS ITEM [ TEST 3 ]

NUMBER OF SAMPLE [ 2501 ]   INDICATION RANGE [ 263 ] ~ [ 10263 ] $\times 10^{-4}$ ABS

ABSORBANCY

(Y-axis: 10263, 7763, 5263, 2763, 263)

(X-axis: 1, 10, 20, 30, 40, 50)

MEASURMENT POINT

EP 0 445 616 A2

# FIG. 10

# FIG. 11